# FASCICULE DE BREVET EUROPEEN

(11) **EP 1 204 246 B1**
(45) Date de publication et mention de la délivrance du brevet: **09.02.2005**
(21) Numéro de dépôt: 01402627.2
(22) Date de dépôt: 11.10.2001
(51) Int. Cl.: H04L 12/28, H04L 29/06

(54) **Méthode de transmission de messages dans un réseau actif**
Nachrichtenübermittlungsverfahren in einem aktiven Netzwerk
Message transmission method in an active network

(30) Priorité: 23.10.2000 FR 0013511
(43) Date de publication de la demande: 08.05.2002
(73) Titulaire: ALCATEL, 75008 Paris (FR)
(72) Inventeur: Marce, Olivier, 91300 Massy (FR); Galand, Damien, 92370 Chaville (FR)
(74) Mandataire: Sciaux, Edmond

(56) Documents cités:
- ALEXANDER, D.S. ET AL.: "Active Network Encapsulation Protocol (ANEP)" IETF, [en ligne] 17 juillet 1997 (1997-07-17), pages 1-11, XP002170896 Extrait de l'Internet: <URL:http://www.cis.upenn.edu/~switchware/ ANEP/docs/ANEP.txt> [extrait le 2001-07-02]
- PARTRIDGE, C. ET AL.: "IPv6 Router Alert Option" IETF - RFC 2711, [en ligne] octobre 1999 (1999-10), pages 1-6, XP002170897 Extrait de l'Internet: <URL:http://www.ietf.cnri.reston.va.us/rfc /rfc2711.txt?number=2711> [extrait le 2001-07-02]

## Description

La présente invention est relative aux réseaux de télécommunication dont les noeuds sont capables de traiter de façon spécifique, les messages d'information qu'ils reçoivent.

L'invention s'applique particulièrement aux réseaux actifs. Ce concept de réseau actif a été introduit par les travaux du DARPA en 1994 et ont fait l'objet d'une première conférence internationale, IWAN 99 (*international Workshop on Active Networks*).

Selon ces travaux, un réseau actif est un réseau dans lequel les noeuds, ou certains d'entre eux, sont capables de traiter d'une façon spécifique, les messages véhiculés par le réseau ou certains d'entre eux. Autrement dit, cela signifie que ces noeuds doivent être capables de dérouler un algorithme autre que ceux qu'ils connaissaient lors de leur conception.

Au sein d'un réseau actif, tous les noeuds ne sont pas obligatoirement pourvus de cette capacité de traitement : on distingue donc des noeuds actifs de noeuds non actifs (c'est-à-dire normaux).

De la même façon, tous les messages ne nécessitent pas forcément un traitement spécifique. On distingue donc les messages actifs des messages non actifs. Parmi les messages actifs, on peut encore distinguer deux catégories :
- Ceux qui contiennent le code exécutable à mettre en oeuvre par les noeuds actifs le recevant.
- Ceux qui contiennent un identificateur du code exécutable à mettre en oeuvre par ces mêmes noeuds actifs.

Le *draft* IETF intitulé *« Active Network Encapsulation Protocol (ANEP)* » de Alden W. Jackson, Angelos D. Keromytis, Gary J. Minden et David Wetherall divulgue une méthode pour véhiculer du code actif dans un message actif (plus précisément, dans un paquet IP). Il propose un format d'entête d'un paquet actif encapsulé dans un paquet IP.

La première étape que doit réaliser un noeud actif recevant un message est de déterminer si ce message nécessite la mise en oeuvre d'un code exécutable ou non.

Typiquement, le format des messages actifs est constitué d'un en-tête et d'un corps (ou *payload* en anglais). Lorsqu'un message actif contient du code exécutable, celui-ci ne peut être inséré que dans le corps du message, dans la mesure où l'en-tête est de taille réduite.

Une première façon de faire pour déterminer si un message est un message actif ou non, consiste à analyser le corps du message.

Une telle façon de faire est toutefois non satisfaisante.

En effet, l'analyse du corps oblige à un décodage de celui-ci. Ce décodage est relativement long et donc sa répétition sur tous les noeuds actifs traversés par un message a un impact important sur les performances du réseau.

Une seconde solution a été proposée par le RFC 2711 de l'IETF (*Internet Engineering Task Force*) intitulé « *IPv6 Router Alert Option ».* Selon ce document, on utilise un champ appelé « *Router Alert* » pour transmettre un drapeau indiquant si le corps utile contient du code exécutable ou non. Ainsi, lorsque le message ne contient pas de code exécutable, le routeur actif le recevant peut faire l'économie du décodage du corps du message simplement en analysant la valeur de ce champ.

Bien que présentant une amélioration notable, cette solution n'est pas non plus satisfaisante.

En effet, les réseaux actuels sont le plus souvent hétérogènes. Autrement dit, ils comportent des noeuds d'origines diverses et présentant donc des caractéristiques variées. Par conséquent, les noeuds actifs d'un réseau actif peuvent présenter des environnements d'exécution différents : ainsi, un même code exécutable pourra être traité par un premier noeud actif mais pas par un second.

Aussi, selon la solution présentée dans le RFC 2711, un noeud actif devra décoder le corps d'un message reçu alors même qu'il ne possède pas l'environnement d'exécution nécessaire pour traiter le code exécutable qu'il contient. Il en résulte une perte de performance du réseau.

La présente invention a pour but de pallier cet inconvénient en permettant aux noeuds actifs de décoder le corps du message uniquement lorsque celui-ci contient du code exécutable qu'ils sont à même de mettre zen oeuvre.

Pour ce faire, l'invention a pour premier objet une méthode permettant l'augmentation des performances d'un réseau de télécommunication de type réseau actif comme décrite dans la première revendication.

Un deuxième objet de l'invention est un noeud d'un réseau de télécommunication de type réseau actif comme décrit dans la troisième revendication.

Un troisième objet de l'invention est un noeud d'un réseau de télécommunication de type réseau actif comme décrit dans la cinquième revendication.

L'invention et ses avantages apparaîtront de façon plus claire dans la description qui va suivre, en liaison avec les figures jointes.

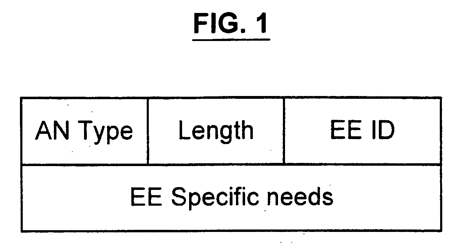

La figure 1 illustre un paquet de routage conforme à une mise en oeuvre de l'invention.

Cette technologie des réseaux actifs s'applique particulièrement bien aux réseaux de type Internet, c'est à dire basés sur un protocole de communication de type IP (*Internet Protocol*). Dans ce contexte, les noeuds sont appelés routeurs, et donc les noeuds actifs sont des routeurs actifs. Par ailleurs, les messages véhiculés par le réseau sont appelés des paquets.

Le RFC 2460 intitulé « *Internet Protocol, Version 6 »* définit des en-têtes d'extension pour les paquets. Un de ces en-têtes d'extension est appelé *« Hop-by-hop »* et est particulièrement prévu pour être rapidement déchiffrable par les routeurs recevant le paquet.

Selon une mise en oeuvre de l'invention, on utilise cet en-tête afin d'y insérer des informations relatives à l'environnement d'exécution au traitement du code exécutable contenu dans le message.

La figure 1 représente un format possible pour cet en-tête d'extension « hop-by-hop », conformément à l'invention.

Selon cette mise en oeuvre, l'en-tête comporte 4 champs.

Le premier champ, référencé « AN Type » sur la figure 1 indique que l'en-tête d'extension « hop-by-hop » concerne les réseaux actifs et contient des informations sur l'environnement d'exécution nécessaire au traitement du code exécutable contenu dans le message.

La valeur que doit prendre ce champ doit être définie par une instance de normalisation afin que l'interprétation de ce champ ne soit pas ambiguë. Dans le cadre du réseau Internet mondial, la charge de fixer cette valeur revient actuellement à l'IANA (*Internet Assigned Number Authority)* au sujet de laquelle on peut trouver des informations sur le site Internet http://www.iana.org.

Ce champ peut par exemple avoir une taille de 8 bits.

Le deuxième champ est référencé « Length » sur la figure 1 et peut aussi avoir une taille de 8 bits. Son rôle est de précisé la taille, en nombre d'octets, des deux champs suivants.

Le troisième champ est référencé « EE ID » (pour *Execution environment* en anglais) et indique un identificateur unique de l'environnement d'exécution. Cet identificateur unique peut être enregistré auprès d'une instance officielle. Un telle instance peut par exemple être l'ANANA (*Active Network Assigned Number Authority*).

Cet environnement d'exécution peut par exemple être le système d'exploitation que doit posséder le routeur afin de traiter le code exécutable contenu dans le message. Il peut aussi identifier une version de ce système d'exploitation. Par exemple, le système d'exploitation peut être une machine virtuelle Java. Dans ce cas, il est important de préciser la version de la machine virtuelle, son fournisseur etc., dans la mesure où il peut exister des problèmes de compatibilité d'une machine virtuelle à l'autre.

Le quatrième et dernier champ selon cette mise en oeuvre est référencé « EE specific needs ». Il permet d'indiquer des informations spécifiques à l'environnement d'exécution précisé dans le champ précédent. Par exemple, on peut indiquer dans ce champ les modules nécessaires au traitement du code exécutable.

Le format précis et la façon dont ces informations sont stockées dans le champ « EE Specific needs » est propre à chaque environnement d'exécution.

À la réception d'un message du type précédemment décrit, un routeur peut donc analyser rapidement les en-têtes d'extension et déterminer si l'un d'entre eux comporte dans le champ « AN Type » la valeur correspondant aux réseaux actifs et à l'identification de l'environnement d'exécution.

Si tel est le cas, il peut alors analyser le champ « EE ID ». Il doit alors comparer la valeur de ce champ avec le ou les environnements d'exécution dont il dispose. Il est important de noter ici qu'un même routeur peut posséder plusieurs environnements d'exécution (par exemple, un système d'exploitation propriétaire et optimisé et une machine virtuelle Java), et que ces environnements d'exécution peuvent éventuellement être chargés dynamiquement lorsque le routeur en a besoin.

Si le champ « EE ID » ne correspond à aucun des environnements d'exécution disponibles pour le routeur, celui-ci n'a pas besoin d'analyser la charge utile du message, et peut alors décider de l'acheminer selon un algorithme de routage qu'il possède, vers un autre routeur.

Si le champ « EE ID » correspond à un de ses environnements d'exécution, et après l'avoir chargé le cas échéant, le routeur peut alors analyser le champ « EE Specific needs ».

Si par exemple, les modules qui y sont mentionnés sont disponibles pour le routeur, il peut alors analyser le corps du message, en sachant par avance qu'il sera en mesure de traiter le code exécutable qu'il contient.

Dans le cas contraire, le routeur peut choisir d'acheminer le message vers un autre routeur, conformément à un algorithme de routage.

## Revendications

1. Procédé permettant l'augmentation des performances d'un réseau de télécommunication de type réseau actif, dans lequel ou moins certains des noeuds dudit réseau possèdent un ou plusieurs environnement d'exécution permettant de traiter du code exécutable, ledit procédé consistant à émettre et recevoir un paquet composé d'un en-tête et d'un corps contenant un code exécutable permettant de traiter de façon spécifique ledit paquet, ledit procédé étant **caractérisé en ce qu'**il consiste à :
- insérer dans ledit en-tête des informations relatives à l'environnement d'exécution nécessaire pour traiter ledit code exécutable, lors de l'émission,
- analyser les informations contenues dans ledit en-tête lors de la réception pour déterminer si ledit code exécutable peut être traité par ledit un ou plusieurs environnement d'exécution, ledit corps n'étant analysé uniquement si ledit code exécutable peut effectivement être traité par ledit un ou plusieurs environnement d'exécution.

2. Procédé selon la revendication précédente, dans lequel lesdites informations relatives à l'environnement d'exécution sont insérées dans un en-tête d'extension « hop-by-hop ».

3. Noeud d'un réseau de télécommunication de type réseau actif, possédant des moyens pour émettre des paquets composés d'un en-tête et d'un corps, ledit corps contenant du code exécutable permettant de traiter de façon spécifique lesdits paquets, **caractérisé en ce que** les moyens d'émission sont prévus pour insérer dans ledit en-tête des informations relatives à l'environnement d'exécution nécessaire pour traiter ledit code exécutable.

4. Noeud d'un réseau de télécommunication selon la revendication précédente, dans lequel lesdits moyens d'émission sont prévus pour insérer lesdites informations dans un en-tête d'extension « hop-by-hop ».

5. Noeud d'un réseau de télécommunication de type réseau actif, possédant au moins un environnement d'exécution pour traiter du code exécutable et des moyens de réception pour recevoir des paquets composés d'un en-tête et d'un corps, ledit corps contenant du code exécutable permettant de traiter de façon spécifique lesdits paquets, **caractérisé en ce qu'**il comporte en outre des moyens pour déterminer à partir d'informations contenues dans ledit en-tête si ledit code exécutable peut être traité par ledit au moins un environnement d'exécution, et pour décider d'analyser ledit corps ou non, en fonction de cette détermination.

## Patentansprüche

1. Verfahren zur Erhöhung der Leistungen eines Telekommunikationsnetzes vom Typ eines aktiven Netzwerks, in dem zumindest einige der Knoten dieses Netzwerks eine oder mehrere Ausführungsumgebungen besitzen, mit denen ausführbarer Code verarbeitet werden kann, wobei dieses Verfahren darin besteht, ein Paket zu senden und zu empfangen, welches aus einem Header und einer Nutzlast besteht, die einen ausführbaren Code enthält, mit dessen Hilfe dieses Paket auf spezifische Weise verarbeitet werden kann, wobei dieses Verfahren **dadurch gekennzeichnet ist, dass** darin besteht:
- in den Header Informationen über die Ausführungsumgebungen einzufügen, die zur Verarbeitung des ausführbaren Codes beim Senden erforderlich ist;
- die in dem Header enthaltenen Informationen beim Empfangen zu analysieren, um festzustellen, ob der ausführbare Code von der einen oder den mehreren Ausführungsumgebungen verarbeitet werden kann, wobei die Nutzlast ausschließlich dann analysiert wird, wenn der ausführbare Code tatsächlich von der einen oder den mehreren Ausführungsumgebungen verarbeitet werden kann.

2. Verfahren nach dem vorhergehenden Anspruch, bei dem die Informationen über die Ausführungsumgebungen in einen "Hop-by-Hop"-Erweiterungsheader eingefügt werden.

3. Knoten eines Telekommunikationsnetzes vom Typ eines aktiven Netzwerks, der Vorrichtungen zum Senden von Paketen besitzt, welche aus einem Header und einer Nutzlast bestehen, wobei die Nutzlast ausführbaren Code enthält, mit dessen Hilfe diese Pakete auf spezifische Weise verarbeitet werden können, **dadurch gekennzeichnet, dass** die Sendevorrichtungen dafür vorgesehen sind, in diesen Header Informationen über die zur Verarbeitung dieses ausführbaren Codes erforderliche Ausführungsumgebung einzufügen.

4. Knoten eines Telekommunikationsnetzes nach dem vorhergehenden Anspruch, bei dem die Sendevorrichtungen dafür vorgesehen sind, die genannten Informationen in einen "Hop-by-Hop"-Erweiterungsheader einzufügen.

5. Knoten eines Telekommunikationsnetzes vom Typ eines aktiven Netzwerks, der mindestens eine Ausführungsumgebung zur Verarbeitung von ausführbarem Code sowie Empfangsvorrichtungen zum Empfangen von Paketen besitzt, die aus einem Header und einer Nutzlast zusammengesetzt sind, wobei die Nutzlast ausführbaren Code enthält, mit dessen Hilfe diese Pakete in spezifischer Weise verarbeitet werden können, **dadurch gekennzeichnet, dass** er außerdem Vorrichtungen enthält, um ausgehend von den in dem Header enthaltenen Informationen zu bestimmen, ob der ausführbare Code von der mindestens einen Ausführungsumgebung verarbeitet werden kann, und um zu entscheiden, ob die Nutzlast in Abhängigkeit von dieser Feststellung analysiert wird oder nicht.

## Claims

1. A method that makes it possible to increase the performance of a telecommunications network of the active network type, in which at least some nodes of said network have one or more execution environments enabling executable code to be processed, said method consisting in transmitting and receiving a packet comprising a header and a payload containing executable code enabling said packet to be processed in specific manner, said method being **characterized in that** it consists:
- during transmission, in inserting into said header information relating to the execution environment necessary for processing said executable code; and
- during reception, in analyzing the information contained in said header to determine if said executable code can be processed in said one or more execution environments, said payload being analyzed only if said executable code can be processed in said one or more execution environments.

2. A method according to claim 1, wherein said information relating to the execution environment is inserted into a "hop-by-hop" extension header.

3. A telecommunications network node of the active network type including means for sending messages comprising a header and a payload, said payload containing executable code enabling said packets to be processed in specific manner, **characterized in that** the sending means are adapted to insert into said header information relating to the execution environment necessary for processing said executable code.

4. A telecommunications network node according to claim 3, wherein said sending means are adapted to insert said information into a "hop-by-hop" extension header.

5. A telecommunications network node having at least one execution environment for processing executable code and receiving means for receiving messages comprising a header and a payload, said payload containing executable code enabling said packets to be processed in specific manner, **characterized in that** it further includes means for determining from information contained in said header if said executable code can be processed in said at least one execution environment and for deciding whether to analyze said payload or not as a function of that determination.
